# EUROPÄISCHE PATENTSCHRIFT

(11) **EP 3 141 563 B1**
(45) Veröffentlichungstag und Bekanntmachung des Hinweises auf die Patenterteilung: **08.11.2017**
(21) Anmeldenummer: 15183724.2
(22) Anmeldetag: 03.09.2015
(51) Int. Cl.: C08B 30/12, B01F 5/02, C09J 103/02

(54) **VERFAHREN SOWIE VORRICHTUNG ZUM HERSTELLEN EINES UMWANDLUNGSPRODUKTES, INSBESONDERE VON STÄRKEKLEISTER**
METHOD AND APPARATUS FOR MAKING A CONVERSION PRODUCT, IN PARTICULAR STARCH GLUE
PROCEDE ET DISPOSITIF DE FABRICATION D'UN PRODUIT DE TRANSFORMATION, EN PARTICULIER D'EMPOIS

(43) Veröffentlichungstag der Anmeldung: 15.03.2017
(73) Patentinhaber: Ahk Service & Solutions GmbH, 74193 Schwaigern (DE)
(72) Erfinder: Abendschön, Günter, 74193 Schwaigern (DE); Noll, Bernhard, 74544 Michelbach an der Bilz (DE)
(74) Vertreter: Wagner, Kilian

(56) Entgegenhaltungen:
- EP-A1- 0 575 762
- CA-A- 629 435

## Beschreibung

Die Erfindung betrifft ein Verfahren zum kontinuierlichen Herstellen eines, bevorzugt Klebeeigenschaften aufweisenden, Umwandlungsproduktes, bevorzugt für die Lebensmittelindustrie, gemäß Patentanspruch 1. Desweiteren wird eine Umwandlungsvorrichtung zur Durchführung eines solchen Verfahrens offenbart. In der Lebensmittelindustrie, der chemischen Industrie, der papierverarbeitenden Industrie sowie der Wäschereiindustrie werden in deren Prozessen stärkehaltige Suspensionen zugeführt, wobei die Stärke durch Wasser und erhöhte Temperatur verkleistert. Kartoffelstärke verkleistert beispielsweise ab 62,5°C, während Weizenstärke ab 67,5°C verkleistert. Stärkekleister besitzt dabei je nach Stärkesorte ein verschiedenes Steifungsvermögen.

In der Praxis ist die Herstellung von Stärkekleister (verkleisterter Suspension) problematisch bzw. verfahrenstechnisch aufwendig, da sich beim Kontakt von noch unverkleisterter Stärke mit heißem Wasser sofort Grenzschichten ausbilden, die ein weiteres Eindringen von Wasser verhindern (gel-blocking), so dass eine unerwünschte Klümpchenbildung eintritt.

Als Konsequenz daraus wird in der bisherigen Praxis der Verkleisterungsprozess in mehrere Teilschritte gegliedert, wobei in einem ersten Schritt in der Regel eine Mischung von Stärkepulver mit Wasser unterhalb der Verkleisterungstemperatur (Geliertemperatur) erfolgt, woraufhin dann in einem zweiten Schritt (Erhitzungsschritt) die Pulver-Wassermischung durch Wärmeeintrag, beispielsweise Wärmeübertragung an einer Wärmeübertragungsfläche oder durch das Einleiten von Dampf erhitzt wird. Diese Prozesse erfolgen batch-weise oder kontinuierlich.

So ist aus der EP 0 333 674 A2 ein solches zweistufiges Verfahren zur Stärkekleisterherstellung bekannt, welches eine kalte Vormischung und einen Erwärmungsschritt durch Dampfinjektion unter Druck umfasst. Ebenfalls ein zweistufiges Verfahren ist in der US 7,930,911 B1 beschrieben, wobei hier das Erhitzen in einem Wärmetauscher erfolgt.

Alternativ kann auch heißes Wasser vorgelegt werden und das Stärkepulver wird langsam unter intensivem Rühren eingebracht. Hier ist keine kontinuierliche Arbeitsweise möglich.

Die EP 0 041 669 A1 beschreibt ein Verfahren zur Erhitzung einer Stärkesuspension unter Druck und einer anschließenden Entspannung.

Aus der CA 629 435 A ist ein sogenannter Jet-Cooker bekannt, bei welchem in Wasser suspendierte Stärke mit einem unter 5 bar Druck stehenden Dampfstrahl beaufschlagt wird.

Die EP 0 575 762 A1 beschreibt eine Vorrichtung zur Erzeugung von Milchschaum für Cappuccino, wobei Milch mit einem Dampfstrahl mit geringem Druck beaufschlagt wird.

Ausgehend von dem vorgenannten Stand der Technik liegt der Erfindung die Aufgabe zugrunde, ein verbessertes Umwandlungsverfahren anzugeben, welches ein kontinuierliches Herstellen eines Umwandlungsproduktes, insbesondere einer hochviskosen Suspension oder Paste, insbesondere eines Stärkekleisters oder eines Proteinklebers in einem einzigen Arbeitsschritt in einem kontinuierlichen Betrieb ermöglicht und welches sicherstellt, dass eine unerwünschte Klümpchenbildung im Umwandlungsprodukt vermieden wird.

Ferner wird eine Vorrichtung zur Durchführung eines solchen Umwandlungsverfahrens offenbart. Hinsichtlich des Verfahrens wird die Aufgabe mit den Merkmalen des Anspruchs 1 gelöst, d.h. mit einem Verfahren zum kontinuierlichen Herstellen eines Umwandlungsproduktes, wobei stärkehaltiges und/oder proteinhaltiges Ausgangsmaterial einer Mischkammer (2) zugeführt wird und das Ausgangsmaterial mit einer auf eine Prozesstemperatur (Tᵤ) von mindesten 50°C zur Umwandlung des Ausgangsmaterials in das Umwandlungsprodukt erwärmten Flüssigkeit in Form eines durch eine Druckdüse (6) strömenden Druckstrahls (7) beaufschlagt und dadurch gegen eine Prallfläche (10) gefördert wird,
dadurch gekennzeichnet,
dass das Ausgangsmaterial pulverförmig der Mischkammer (2) bevorzugt in Form von Mehl, Stärkepulver, Getreidekörner, Getreideschrot, Gelatinepulver oder Glutenpulver zugeführt wird, und beim Niedergehen in der Mischkammer (2) mit dem als Flüssigkeitsstrahl ausgebildeten Druckstrahl (7) beaufschlagt wird, und dass die Flüssigkeit beim Erzeugen des Druckstrahls (7) mit einem Förderdruck von mindestens 10 bar durch eine Druckdüse (6) gefördert wird und eine Geschwindigkeit von mindestens 100 km/h aufweist.

Vorteilhafte Weiterbildungen der Erfindung sind in den Unteransprüchen angegeben.

Der Erfindung liegt der Gedanke zugrunde, ein umzuwandelndes Ausgangsmaterial, insbesondere ein Pulver, einer Mischkammer derart, beispielsweise über eine Förderschnecke, zuzuführen, dass sich das Ausgangsmaterial (bevorzugt ein schütt- oder siegelfähiger Trockenstoff), insbesondere schwerkraftbedingt in der Mischkammer selbsttätig nach unten bewegt, insbesondere von einem Mischkammereingang nach unten fällt, wobei das stärkehaltige und/oder proteinhaltige, bevorzugt aus Stärke oder Proteinen bestehende Ausgangsmaterial während dieser Abwärtsbewegung mit einem unter hohem Druck aus einer Düse austretenden Flüssigkeitsstrahl beaufschlagt wird. Dabei ist es wesentlich, dass die Flüssigkeit vor dem Inkontaktkommen mit dem Ausgangsmaterial erwärmt wurde auf eine Prozesstemperatur, die zur Umwandlung des stärkehaltigen oder proteeinhaltigen Ausgangsmaterials in das gewünschte, insbesondere Klebeeigenschaften aufweisende Umwandlungsprodukt führt. Dabei beträgt die Prozesstemperatur mindestens einer Umwandlungstemperatur, die zur, bevorzugt chemischen und/oder physikalischen, Umwandlung des Ausgangsmaterials in das Umwandlungsprodukt erforderlich ist. Erfindungsgemäß beträgt diese Prozesstemperatur der Flüssigkeit, insbesondere am Düsenaustritt, mindestens 50°C. Durch die Beaufschlagung des, insbesondere pulverförmigen, Ausgangsmaterials mit dem erwärmten, insbesondere heißen Druckstrahl bzw. Flüssigkeitsstrahl wird das Ausgangsmaterial gegen eine Prallfläche des Mischbehälters beschleunigt und es erfolgt durch kombinierte Wechselwirkung von Prozesstemperatur und mechanischer Kraftbeaufschlagung eine unmittelbare Umwandlung, insbesondere Verkleisterung oder Lösung, des Ausgangsmaterials.

Die vorerwähnte Prallfläche wird bevorzugt von einer Mischkammerinnenwand einer, beispielsweise zylindrischen Mischkammer gebildet, kann jedoch auch zusätzlich oder alternativ von einem Mischkammereinbau gebildet sein. Das Ausgangsmaterial, welches sich, wie erwähnt, bevorzugt im freien Fall, in der Mischkammer nach unten bewegt, wird von dem unter hohem Druck stehenden und dadurch eine hohe Geschwindigkeit aufweisenden Flüssigkeitsstrahl mit mindestens auf Umwandlungstemperatur erwärmter Flüssigkeit benetzt, durchmischt und gleichzeitig erhitzt. Spätestens nach dem Auftreffen auf die Prallfläche ist der Erwärmungsvorgang des Ausgangsmaterials sowie der Umwandlungsvorgang, insbesondere ein Verkleisterungs- und/oder Lösungsvorgang, oder, wie später noch erläutert werden wird, ein Frittiervorgang, innerhalb kürzester Zeit, insbesondere in Bruchteilen einer Sekunde, abgeschlossen, so dass das Umwandlungsprodukt, insbesondere am Grund des Mischbehälters aufgefangen und vorzugsweise direkt mittels einer Pumpe zu einem weiteren Prozess gefördert werden kann.

Durch die hohe Geschwindigkeit der unter Druck stehenden Flüssigkeit in Kombination mit deren Prozesstemperatur sowie der aus der hohen Geschwindigkeit des Flüssigkeitsstrahls verbundenen Wucht des Aufpralls des Ausgangsmaterials, welches bevorzugt beim Aufprall bereits zumindest teilweise, vorzugsweise vollständig umgewandelt ist kann eine im Stand der Technik auftretende Klümpchenbildung wirksam verhindert werden.

Das erfindungsgemäße Verfahren und die hier offenbarte Vorrichtung haben u.a. zusätzlich den Vorteil einer erhöhten Personensicherheit aufgrund der vollautomatischen Funktionsweise - ein Verbrühen bei einem Umfüllvorgang, wie dies im Stand der Technik insbesondere bei Batch-Verfahren vorkommen kann, besteht nicht.

Im Hinblick auf die Wahl des Ausgangsmaterials gibt es unterschiedliche Möglichkeiten. Erfindungsgemäß handelt es sich um ein trockenes pulverförmiges Ausgangsmaterial, welches jedenfalls stärkehaltig und/oder proteinhaltig ist und ganz besonders bevorzugt aus Stärke oder alternativ Proteinen besteht. Das resultierende Umwandlungsprodukt ist abhängig von der Wahl des Ausgangsmaterials sowie der Wahl der Flüssigkeit.

So ist es beispielsweise denkbar und bevorzugt, zur Herstellung von Stärkekleister Stärkepulver, insbesondere reines Stärkepulver oder Mehl, insbesondere Getreidemehl, als Ausgangsmaterial einzusetzen und als Flüssigkeit Wasser, die bevorzugt mindestens auf eine Verkleisterungstemperatur des stärkehaltigen oder aus Stärke bestehenden Ausgangsmaterials erwärmt wurde bzw. mit dieser Prozesstemperatur auf das Ausgangsmaterial trifft. Bevorzugt beträgt die Wassertemperatur am Düsenaustritt (Prozesstemperatur) dabei mindestens 55°C, ganz besonders bevorzugt zwischen 55°C und 120°C. Verkleisterungstemperaturen von typischen Stärken betragen bevorzugt mindestens zwischen 55°C und 87°C.

Die Verkleisterungstemperatur von Kartoffelstärke beträgt beispielsweise 62,5°C und die von Weizenstärke 67,5°C. Insgesamt ist es von Vorteil, wenn das Wasser vor dem Austritt durch eine in der Mischkammer befindliche Düse mit Hilfe geeigneter Heizmittel, insbesondere bei einem üblichen Leitungswasserdruck zwischen etwa 3bar und 6bar, auf eine Temperatur von mindestens oder weiter bevorzugt über 100°C, insbesondere auf eine Temperatur aus einem Temperaturbereich zwischen etwa 101°C und 130°C, insbesondere auf 105°C oder 110°C erhitzt und dann durch die Düse unter hohem Druck von vorzugsweise über 30bar gefördert wird und dann die Stärke oder das Mehl, wie oben beschrieben, beaufschlagt bzw. benetzt. Der Verkleisterungsvorgang ist durch die Wechselwirkung von Wasser, hoher Wassertemperatur und mechanischer Beaufschlagung durch Aufprall auf die Prallfläche innerhalb kürzester Zeit abgeschlossen und eine Klumpenbildung wird wirksam vermieden.

Auch ist es mit dem erfindungsgemäßen Verfahren möglich, Proteine als Ausgangsmaterial, insbesondere in Pulverform zu denaturieren und in Flüssigkeit zu lösen, wobei auch hier bevorzugt erwärmtes Wasser als Flüssigkeit zum Einsatz kommt, wobei das Wasser bevorzugt auf eine Proteinlösungs- und/oder Denaturierungstemperatur des proteinhaltigen Ausgangsmaterials erhitzt wird. So kann bei dieser Ausgestaltung des Verfahrens ein proteinhaltiges oder aus Proteinen bestehendes Ausgangsmaterial, insbesondere ein Gelatinepulver oder ein Glutenpulver in einen Proteinkleber umgewandelt bzw. das Protein, insbesondere die Gelatine oder das Gluten in dem erwärmtem Wasser gelöst werden, wobei das Wasser hierzu bevorzugt auf eine Prozesstemperatur von mindestens 80°C erwärmt mit dem proteinhaltigen oder aus Proteinen bestehenden Ausgangsmaterial in Kontakt gebracht wird. Gelatine quillt in Wasser und löst sich bei Erwärmen ab etwa 50°C auf. Dieser Gel-/Solübergang kann hervorragend durch das erfindungsgemäße Verfahren beschleunigt bzw. kontinuierlich ohne Klümpchenbildung umgesetzt werden.

Gluten bilden durch die Beaufschlagung mit erwärmtem Wasser sogenanntes Klebereiweiß als Umwandlungsprodukt.

Bevorzugt wird auch hierzu das Wasser vor dem Düsenaustritt mit geeigneten Heizmitteln auf eine Temperatur von mindestens 100°C erhitzt.

Auch ist es mit dem erfindungsgemäßen Verfahren möglich, Getreidekörner oder Getreideschrot in einem kontinuierlichen Verfahren in kürzester Zeit als Ausgangsmaterial zu quellen und somit in das dann aus gequellten Getreidekörnern bzw. Schrot bestehende Umwandlungsprodukt zu überführen.

Unabhängig von der konkreten Wahl des Ausgangsmaterials hat es sich als vorteilhaft herausgestellt, wenn auf einen Gewichtsanteil Ausgangsmaterial mit mindestens 1,5 Gewichtsanteil Wasser, bevorzugt mindestens 2 Gewichtsanteile Wasser, bevorzugt mindestens 2 Gewichtsanteile Wasser, ganz besonders bevorzugt zwischen 1,5 Gewichtsanteile und 5 Gewichtsanteile Wasser kommt.

In überraschender Weise lässt sich das erfindungsgemäße Verfahren auch als kontinuierliches Frittierverfahren abwandeln, wobei in diesem Fall als Flüssigkeit auf eine Frittiertemperatur erwärmtes Öl zum Einsatz kommt. Dieses erwärmte Öl kann erhalten werden durch Erwärmen von kaltem Öl und/oder Fett vor dem Fördern durch mindestens eine Druckdüse in der Mischkammer. Wird beispielsweise bei der Realisierung eines solchen erfindungsgemäßen Frittierverfahrens als Ausgangsmaterial Stärke oder ein stärkehaltiges Ausgangsmaterial, insbesondere ein Pulver eingesetzt, wird das Ausgangsmaterial durch das erfindungsgemäße Misch-Frittieren und somit umgewandelt, insbesondere in gebräunte Stärke als Umwandlungsprodukt erhalten, die mit Öl versetzt ist. Bevorzugt zeichnet sich das (frittierte) Umwandlungsprodukt durch eine trockene Kruste und/oder aromatische Röststoffe (Maillard-Reaktion) aus.

Für den Fall der Realisierung eines Frittierverfahrens ist es bevorzugt, wenn auf einen Gewichtsanteil Ausgangsmaterial mindestens ein Gewichtsanteil Öl, ganz besonders bevorzugt zwischen 2 Gewichtsanteilen und 3 Gewichtsanteilen Öl kommen.

Gemäß der Erfindung ist mit Vorteil vorgesehen, dass zur Gewährleistung einer ausreichend hohen kinetischen Energie des erwärmten Fluidstrahls die Flüssigkeit vor dem Eintritt in die Düse mit einem (hydraulischen) Förderdruck von mindestens 10bar, bevorzugt mindestens 20bar und/oder aus einem Druckbereich zwischen 10bar und 500bar beaufschlagt wird. Erfindungsgemäß beträgt die Geschwindigkeit des Druckstrahls mindestens 100 km/h. Besonders bevorzugt ist es, wenn die Flüssigkeitsaustrittsgeschwindigkeit der Flüssigkeit aus der Düse aus einem Bereich zwischen 100 km/h und 500 km/h, ganz besonders bevorzugt zwischen 250 km/h und 500 km/h eingestellt wird.

Im Hinblick auf die konkrete Ausgestaltung der mindestens einen Druckdüse, durch die die mindestens auf Umwandlungstemperatur erwähnte Flüssigkeit in die Mischkammer gefördert wird, gibt es unterschiedliche Möglichkeiten. So ist es möglich und bevorzugt, die Druckdüse als Rotationsdüse auszubilden, die mit einer hohen Drehzahl rotiert. Die Druckdüse kann eine einzige Düsenöffnung oder alternativ mehrere Düsenöffnungen aufweisen. Unabhängig davon, ob die Düse als Rotationsdüse oder Nicht-Rotationsdüse ausgebildet ist, sind grundsätzlich unterschiedliche Spritzbilder realisierbar. Besonders bevorzugt ist es, wenn die Druckdüse ein Hohlkegel-Spritzbilder oder alternativ ein flaches bzw. tellerförmiges Spritzbild erzeugend ausgebildet ist.

Zum Erwärmen der Flüssigkeit vor dem Austritt aus der Druckdüse ist es bevorzugt, wenn in Strömungsrichtung der Flüssigkeit vor der Druckdüse entsprechende Heizmittel vorgesehen sind. Der Wärmeenergieeintrag in die Flüssigkeit kann durch unmittelbare Dampfeinspeisung oder über eine Übergangsfläche, insbesondere in einem Wärmetauscher oder in einem Durchlauferhitzer erfolgen. Besonders bevorzugt ist es, wenn, wie eingangs erwähnt, die Flüssigkeit mittels der Heizmittel auf eine Temperatur oberhalb der Prozesstemperatur erhitzt wird, ganz besonders bevorzugt überhitzt wird, d.h. auf einen Wert oberhalb der Verdampfungstemperatur, bevorzugt von 100°C, wozu entsprechender Gegendruck, insbesondere Frischwasserleitungsdruck gegeben sein sollte. Besonders zweckmäßig ist es, wenn die Temperatur, auf die die Flüssigkeit erhitzt wird, geregelt wird, wozu hierzu den Heizmitteln bevorzugt ein Temperaturfühler zugeordnet ist, mit dem eine Ist-Temperatur der Flüssigkeit gemessen werden kann, beispielsweise und bevorzugt die Temperatur der Flüssigkeit vor und/oder nach einem Druckdüsenaustritt, um diesen Wert im Rahmen der Regelung mit einem Soll-Wert zu vergleichen und die Heizmittel entsprechend des Messergebnisses anzusteuern.

Als besonders vorteilhaft hat sich eine Ausführungsform des Verfahrens und der Vorrichtung herausgestellt, bei welchem die Druckdüse, insbesondere während der Beaufschlagung des Ausgangsmaterials mit dem Druckstrahl, relativ zur Prallfläche verstellt wird, um somit eine Selbstreinigung des bevorzugt als Mischrohr ausgebildeten Mischbehälters zu gewährleisten. Ganz besonders bevorzugt wird hierzu die Düse, beispielsweise über einen Pneumatikzylinder, insbesondere zusammen mit ihrer Halterung, bevorzugt translatorisch, auf und ab bzw. hoch und runter bewegt, was zu einem Abreinigen von dem Umwandlungsprodukt von der Prallfläche und/oder der Mischkammerwand führt. Denkbar ist es und bevorzugt die Düse in festgelegten, insbesondere einstellbaren, Intervallen zu verstellen.

Grundsätzlich ist es möglich und bevorzugt, das Umwandlungsprodukt, insbesondere nach Verlassen der Mischkammer, mit weiteren Zutaten zu vermischen - so kann beispielsweise Gelatinepulver mittels des erfindungsgemäßen Verfahrens in Wasser aufgelöst und dann mit Zucker, ggf. weiterem Wasser und Säure, insbesondere Zitronensäure vermischt werden, beispielsweise in einem der Mischkammer nachgeordneten Kochkessel, beispielsweise zur Herstellung von Fruchtgummi. Hier wird ein langwieriger Prozess des kalten Quellens, wie dieser bisher noch üblich ist eingespart.

Grundsätzlich ist es jedoch auch denkbar noch in der Mischkammer weitere Zutaten, wie Zucker, Wasser und/oder Säure zuzusetzen, wobei jedoch hierauf bevorzugt verzichtet wird.

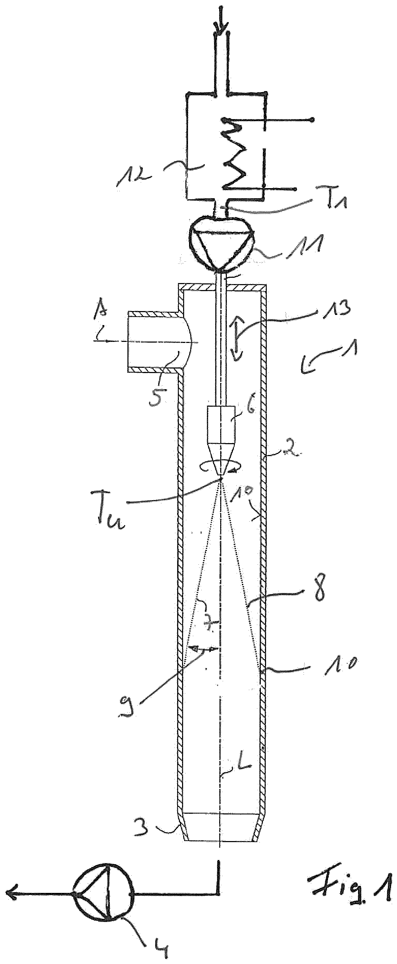

Im Folgenden werden mögliche Anwendungsbeispiele des erfindungsgemäßen Verfahrens beschrieben, die jedoch den Erfindungsgegenstand nicht beschränken sollen, sondern als vorteilhafte Ausgestaltungen zu verstehen sind:
a) Es kann im Rahmen des erfindungsgemäßen Verfahrens als Ausgangsmaterial pulverförmiges Weizenmehl eingesetzt werden, welches dann mit erwärmtem Wasser zu einer puddingartigen Konsistenz vermischt wird.
   Als besonders vorteilhaft hat es sich herausgestellt, einen Gewichtsanteil Weizenmehl mit drei Gewichtsanteilen Wasser zu vermischen, wobei das Wasser bevorzugt vor dem Düsenaustritt in entsprechenden Heizmitteln auf eine Temperatur von über 100°C, insbesondere auf bis zu 125°C erwärmt, d.h. überhitzt wird, wobei das Wasser beim Düsenaustritt bevorzugt eine Temperatur von bis zu Düsenaustritt bevorzugt eine Temperatur von bis zu 105°C (höhere Temperatur als die Prozesstemperatur) aufweist. Die erhaltene (Kleber-)Paste kann in einem weiteren, nachgeordneten Verfahrensschritt als Zutat einem Weizenteig zugesetzt werden, um die Krumen- und Krusteneigenschaften zu verändern bzw. zu optimieren.
b) Alternativ ist es möglich, Kartoffelstärke mit erwärmtem Wasser im Rahmen des erfindungsgemäßen Verfahrens zu beaufschlagen, wobei bevorzugt ein Gewichtsanteil Kartoffelstärke mit zwei Gewichtsanteilen Wasser vermischt wird, welches hierzu die Mischkammer-Düse unter hohem Druck verlässt. Es hat sich als besonders vorteilhaft herausgestellt, das Wasser vor dem Düsenaustritt mittels Heizmitteln auf 110°C zu erwärmen, wobei das Wasser beim Düsenaustritt bevorzugt eine Temperatur von bis zu 105°C aufweist. Die so erhaltene Suspension bzw. der Stärkekleister kann in einer Mischung aus Kartoffelflocken, Salz und ggf. Gewürzen zugegeben werden zur Herstellung von Kartoffelchips.
c) Auch ist es möglich Maismehl als Ausgangsmaterial mit einer erwärmten Kalziumhydroxid-Lösung zu beaufschlagen, wobei es besonders zweckmäßig ist, ein Gewichtsanteil Maismehl mit 2,5 Gewichtsanteilen aus 2%iger Kalziumhydroxid-Lösung zu beaufschlagen, welche vor dem Düsenaustritt erwärmt wurde, beispielsweise auf eine Temperatur von 100°C. Das Ergebnis kann ein Ausgangsstoff für die Tortillachips-Produktion aus Masa-Mehl sein.
d) Auch ist es möglich Weizenstärke mit erwärmtem Wasser zu vermischen. Insbesondere wird ein Gewichtsanteil Weizenstärke mit drei Gewichtsanteilen Wasser vermischt, wobei das Wasser bevorzugt auf über 100°C, insbesondere auf 105°C, erwärmt wird. Die erhaltende Kleber-Paste kann dann in einem Durchlaufmischer mit kaltem Wasser auf die benötigte Konzentration für die Verwendung in der Papierveredlung verdünnt werden.
e) Auch ist es möglich Getreidekörner mit unter Druck stehendem, erwärmtem Wasser zu versetzen. Beispielsweise wird ein Gewichtsanteil Getreidekörner mit drei Gewichtsanteilen erwärmtem Wasser vermischt, wobei das Wasser bevorzugt auf eine Temperatur von 100°C erhitzt wird, bevor es der Düse zugeführt wird. Nach dem Umwandlungsvorgang kann das Umwandlungsprodukt in einem Behälter auf Umgebungstemperatur abgekühlt werden - das Quellen der Körner kann hindurch wesentlich beschleunigt werden.
f) Auch ist es möglich Weizenkleber als Ausgangsprodukt in Pulverform mit erwärmtem Wasser, welches durch eine Düse austritt zu versetzen. Als besonders zweckmäßig hat es sich herausgestellt einen Gewichtsanteil Weizenkleber mit vier Gewichtsanteilen Wasser zu vermischen, welches zuvor auf bevorzugt 100°C erwärmt wurde. Bei dem Umwandlungsprodukt handelt es sich beispielsweise um einen Grundstoff für vegetarische Produkte, das als Ersatz oder zusätzlich zu texturiertem Eiweiß eingesetzt werden kann.
g) Auch ist es möglich Gelatinepulver als Ausgangsmaterial mit Wasser zu vermischen, welches bevorzugt auf 100°C vor dem Düsenaustritt erwärmt wurde. Als besonders vorteilhaft hat es sich herausgestellt, einen Gewichtsanteil Gelatinepulver mit drei Gewichtsanteilen Wasser zu vermischen und hierdurch die Gelatine aufzulösen. Dann kann der Proteinkleber mit Zucker, Wasser und Zitronensäure in einem Kochkessel vermischt werden, beispielsweise zur Herstellung von Fruchtgummis. Ein langwieriger Kaltquellprozess wird vermieden.
Weitere Vorteile, Merkmale und Einzelheiten der Erfindung ergeben sich aus der nachfolgenden Beschreibung einer Umwandlungsvorrichtung anhand der einzigen Figur 1.

In Fig. 1 ist eine Umwandlungsvorrichtung 1 zur Durchführung eines erfindungsgemäßen Umwandlungsverfahrens gezeigt. Die Umwandlungsvorrichtung 1 umfasst eine Mischkammer 2 mit vertikaler Längsmittelachse L. Die Mischkammer 2 ist im Wesentlichen zylindrisch ausgestaltet und umfasst eine untere Austragsöffnung 3, die sich verglichen mit dem darüber befindlichen Mischkammerabschnitt kegelförmig nach unten hin verjüngt. Der Austragsöffnung 3 ist eine Förderpumpe 4 nachgeordnet, um später noch zu erläuterndes Umwandlungsprodukt automatisch aus der Mischkammer 2 zu einem weiteren Prozess zu fördern.

In der Zeichnungsebene links oben ist eine Eintragsöffnung 5 zu erkennen, durch die entlang einer Eintragsachse A, welche sich senkrecht zur Längsmittelachse L erstreckt bevorzugt schütt- oder rieselförmiges stärkehaltiges und/oder proteinhaltiges Ausgangsmaterial zuführbar ist. Idealerweise wird hierzu ein nicht gezeigter Schneckenförderer eingesetzt.

Innerhalb der Mischkammer 2 ist eine hier beispielhaft als Rotationsdüse ausgebildete Druckdüse 6 angeordnet mittels welcher ein Druckstrahl 7 aus einer zugeführten Flüssigkeit erzeugbar ist. Die Druckdüse 6 ist derart ausgebildet, dass diese in dem gezeigten Ausführungsbeispiel ein hohlkegelförmiges Spritzbild 8 erzeugt, wobei ein Konuswinkel 9 des Spritzbildes 8, welcher einer Neigung des Druckstrahls 7 zu Längsmittelachse L entspricht, einstellbar ist.

Die Innenumfangsfläche der Mischkammer 2 bildet eine Prallfläche 10, auf welche der Druckstrahl 7 auftrifft bzw. gegen welche der Druckstrahl das von oben nach unten fallende Ausgangsmaterial 3 beschleunigt.

Zu erkennen ist, dass die Düse 10 über eine Hochdruckpumpe 11 mit Flüssigkeit versorgbar ist, wobei die Flüssigkeit zuvor mit Hilfe von exemplarisch dargestellten Heizmitteln 12 auf eine Temperatur T₁ erhitzt wurde und die so erwärmte Flüssigkeit die Düse 6 in der Mischkammer 2 mit einer etwas geringeren Prozesstemperatur T_{U} verlässt. Bevorzugt beträgt der Temperaturverlust auf dem Weg zur Düse, also auf der Strecke zwischen den Heizmitteln 12 und der Düsenöffnung weniger als 6°C. Alternativ kann die Hochdruckpumpe 11 in Förderrichtung auch vor den Heizmitteln 12 angeordnet sein.

In dem konkreten Beispiel sind die Heizmittel 12 als Durchlauferhitzer ausgebildet, die mit Flüssigkeit, beispielsweise unter Leitungsdruck stehendem Frischwasser versorgt werden.

Die Düse 6 ist innerhalb der Mischkammer 2 während des Umwandlungsprozesses in Intervallen translatorisch in den Pfeilrichtungen 13 entlang der Längsmittelachse L verstellbar um somit die Prallfläche 10 während des Prozesses zu reinigen.

Wird beispielsweise durch die Eintragsöffnung 5 Stärkepulver oder Mehl eingeführt, rieselt dieses nach unten und auf Prozesstemperatur, hier mindestens Verkleisterungstemperatur erhitzte Flüssigkeit, hier Wasser trifft unter hohem Druck, von beispielsweise mindestens 40bar auf das Ausgangsmaterial, welches somit gegen die Prallfläche 10 prallt und durch die Wärmeeinwirkung sowie die mechanische Belastung unmittelbar verkleistert und sodann unten mittels der Förderpumpe 4 ausgetragen werden kann.

Bei einer alternativen Ausführungsform kann als Flüssigkeit beispielsweise Öl eingesetzt werden, welches zur Realisierung eines kontinuierlichen Frittierprozesses bevorzugt auf über 130°C erhitzt wird.

### Bezugszeichenliste

- 1: Umwandlungsvorrichtung
- 2: Mischkammer
- 3: Austragsöffnung
- 4: Förderpumpe
- 5: Eintragsöffnung
- 6: Druckdüse
- 7: Druckstrahl
- 8: Spritzbild
- 9: Konuswinkel
- 10: Prallfläche
- 11: Hochdruckpumpe
- 12: Heizmittel
- 13: Pfeilrichtung

- L: Längsmittelachse
- A: Eintragsachse
- T₁: Erwärmungstemperatur
- T_{U}: Prozesstemperatur

## Patentansprüche

1. Verfahren zum kontinuierlichen Herstellen eines Umwandlungsproduktes, wobei stärkehaltiges und/oder proteinhaltiges Ausgangsmaterial einer Mischkammer (2) zugeführt wird und das Ausgangsmaterial mit einer auf eine Prozesstemperatur (T_{U}) von mindestens 50°C zur Umwandlung des Ausgangsmaterials in das Umwandlungsprodukt erwärmten Flüssigkeit in Form eines, durch eine Druckdüse (6) strömenden Druckstrahls (7) beaufschlagt und dadurch gegen eine Prallfläche (10) gefördert wird,
**dadurch gekennzeichnet,**
**dass** das Ausgangsmaterial pulverförmig der Mischkammer, (2) bevorzugt in Form von Mehl, Stärkepulver, Getreidekörner, Getreideschrot, Gelatinepulver oder Glutenpulver zugeführt wird und beim Niedergehen in der Mischkammer (2) mit dem als Flüssigkeitsstrahl ausgebildeten Druckstahl (7) beaufschlagt wird, und dass die Flüssigkeit zum Erzeugen des Druckstrahls (7) mit einem Förderdruck von mindestens 10 bar durch eine Druckdüse (6) gefördert wird und eine Geschwindigkeit von mindestens 100 km/h aufweist.

2. Verfahren nach Anspruch 1,
**dadurch gekennzeichnet,**
**dass** als Umwandlungsprodukt Stärkekleister, frittierte Stärke, gelöste Gelatine oder Proteinkleber hergestellt wird.

3. Verfahren nach Anspruch 1 oder 2,
**dadurch gekennzeichnet,**
**dass** die Prallfläche (10) von einer Mischkammerinnenwand oder einem Mischkammereinbau gebildet wird.

4. Verfahren nach einem der vorherigen Ansprüche,
**dadurch gekennzeichnet,**
**dass** die Umwandlungstemperatur mindestens eine Verkleisterungstemperatur des stärkehaltigen Ausgangsmaterials, eine Proteinlösungs- und/oder Denaturierungstemperatur des proteinhaltigen Ausgangsmaterials oder eine Frittiertemperatur ist.

5. Verfahren nach einem der vorherigen Ansprüche,
**dadurch gekennzeichnet,**
**dass** zur Erzeugung von Stärkekleister als Umwandlungsprodukt oder von gelöstem proteinhaltigem Ausgangsmaterial, insbesondere gelöster Gelatine oder Klebereiweiß, als Umwandlungsprodukt als Flüssigkeit Wasser oder eine wässrige Lösung, insbesondere eine Kalziumhydroxid-Lösung eingesetzt wird und das bzw. die auf eine Prozesstemperatur (T_{U}) von mindestens 55°C, bevorzugt mindestens 60°C, weiter bevorzugt mindestens 70°C, noch weiter bevorzugt mindestens 80°C, besonders bevorzugt mindestens 90°C, erwärmt wird und/oder auf eine Prozesstemperatur (T_{U}) aus einem Wertebereich zwischen 55°C und 130°C, noch weiter bevorzugt zwischen 71°C und 100°C.

6. Verfahren nach einem der Ansprüche 1 bis 4,
**dadurch gekennzeichnet,**
**dass** zur Erzeugung von frittierter Stärke als Umwandlungsprodukt als Flüssigkeit Öl eingesetzt wird und dieses auf eine Prozesstemperatur (T_{U}) von mindestens 130°C, bevorzugt mindestens 140°C, weiter bevorzugt mindestens 150°C, und/oder auf eine Prozesstemperatur (T_{U}) aus einem Wertebereich zwischen 130°C und 200°C, noch weiter bevorzugt zwischen 140°C und 190°C.

7. Verfahren nach einem der der vorhergehenden Ansprüche,
**dadurch gekennzeichnet,**
**dass** zum Erzeugen des Druckstrahls (7) die Flüssigkeit durch die Druckdüse (6) mit einem Förderdruck von mindestens 20 bar und/oder mit einem Förderdruck aus einem Druckbereich zwischen 10 bar und 500 bar, bevorzugt zwischen 30 bar und 500 bar gefördert wird.

8. Verfahren nach Anspruch 7,
**dadurch gekennzeichnet,**
**dass** die Flüssigkeit mit einem in einer Förderrichtung der Flüssigkeit vor der Druckdüse (6) angeordneten Heizmitteln (12), insbesondere einem Durchlauferhitzer erwärmt wird, insbesondere auf eine Temperatur (T₁) oberhalb der Prozesstemperatur (T_{U}).

9. Verfahren nach einem der Ansprüche 7 oder 8,
**dadurch gekennzeichnet,**
**dass** der Druckstrahl (7) eine Geschwindigkeit von mindestens 250 km/h aufweist.

10. Verfahren nach einem der Ansprüche 7 bis 9,
**dadurch gekennzeichnet,**
**dass** die Druckdüse (6) eine Rotationsdüse ist und/oder ein hohlkegelförmiges oder tellerförmiges Spritzbild erzeugend ausgebildet ist.

11. Verfahren nach einem der Ansprüche 7 bis 10,
**dadurch gekennzeichnet,**
**dass** die Druckdüse (6), insbesondere während der Beaufschlagung des Ausgangsmaterials mit dem Druckstrahl (7), relativ zur Prallfläche (10) verstellt wird, bevorzugt translatorisch, noch weiter bevorzugt in einer vertikalen Auf- und Abbewegung.

12. Verfahren nach einem der vorhergehenden Ansprüche,
**dadurch gekennzeichnet,**
**dass** das Umwandlungsprodukt durch Pumpen aus der Mischkammer (2) gefördert wird.

13. Verfahren nach einem der vorhergehenden Ansprüche,
**dadurch gekennzeichnet,**
**dass** das Umwandlungsprodukt, bevorzugt außerhalb der Mischkammer (2), mit weiteren Zutaten, insbesondere zum Herstellen eines Lebensmittels, vermischt wird.

## Claims

1. A method for continuously producing a conversion product, wherein a starch-containing and/or protein-containing starting material is fed to a mixing chamber (2) and the starting material is applied with a liquid, heated to a processing temperature (T_{U}) of at least 50 °C for converting the starting material to the conversion product, in the form of a pressure jet (7) flowing through a pressure nozzle (6) and thereby being conveyed against a baffle (10),
**characterized in that**
the starting material is fed to the mixing chamber (2) in the form of powder, in particular in the form of flour, starch powder, cereal grains, cereal meal, gelatin powder or gluten powder and is applied with the pressure jet (7) configured as liquid jet when descending in the mixing chamber (2), and **in that** the liquid is conveyed through a pressure nozzle (6) with a conveying pressure of at least 10 bar for generating the pressure jet (7) and has a velocity of at least 100 km/h.

2. The method according to claim 1,
**characterized in that**
starch glue, fried starch, dissolved gelatin or protein glue is produced as the conversion product.

3. The method according to claim 1 or 2,
**characterized in that**
the baffle (10) is formed by an inner wall of the mixing chamber or an installation in the mixing chamber.

4. The method according to one of the preceding claims,
**characterized in that**
the conversion temperature is at least a gluing temperature of the starch-containing starting material, a protein-dissolving temperature and/or a denaturation temperature of the protein-containing starting material or a frying temperature.

5. The method according to one of the preceding claims,
**characterized in that**
for generation of starch glue as conversion product or of dissolved protein-containing starting material, in particular dissolved gelatin or gluten, as conversion product, water or an aqueous solution, in particular a calcium hydroxide solution, is used as liquid and which is heated to a processing temperature (T_{U}) of at least 55 °C, preferably at least 60 °C, further preferably at least 70 °C, even further preferably at least 80 °C, particularly preferably at least 90 °C, and/or to a processing temperature (T_{U}) from a value range of between 55 °C and 130 °C, even further preferably between 71 °C and 100 °C.

6. The method according to one of claims 1 to 4,
**characterized in that**
for the generation of fried starch as a conversion product, oil is used as a liquid and to a processing temperature (T_{U}) of at least 130 °C, preferably at least 140 °C, further preferably at least 150 °C, and/or to a processing temperature (T_{U}) from a value range of between 130 °C and 200 °C, even further preferably between 140 °C and 190 °C.

7. The method according to one of the preceding claims,
**characterized in that**
for the generation of the pressure jet (7), the liquid is conveyed through the pressure nozzle (6) with a conveying pressure of at least 20 bar and/or with a conveying pressure from a value range of between 10 bar and 500 bar, preferably between 30 and 500 bar.

8. The method according to claim 7,
**characterized in that**
the liquid is heated by a heating means (12) arranged upstream the pressure nozzle (6) in a conveying direction of the liquid, in particular a flow heater, in particular to a temperature (T₁) above the processing temperature (T_{U}).

9. The method according to one of claims 7 or 8,
**characterized in that**
the pressure jet (7) has a velocity of at least 250 km/h.

10. The method according to one of claims 7 to 9,
**characterized in that**
the pressure nozzle (6) is a rotation nozzle and/or is configured generating a hollow cone-shaped or saucer-shaped spray pattern.

11. The method according to one of claims 7 to 10,
**characterized in that**
the pressure nozzle (6), in particular during the application of the starting material with the pressure jet (7), is adjusted relative to the baffle (10), preferably translatory, even further preferably in a vertical up-and-down movement.

12. The method according to one of the preceding claims,
**characterized in that**
the conversion product is conveyed out of the mixing chamber (2) by pumping.

13. The method according to one of the preceding claims,
**characterized in that**
the conversion product is mixed, preferably outside the mixing chamber (2), with further ingredients, in particular for producing food.

## Revendications

1. Procédé pour la préparation continue d'un produit de transformation, un matériau de départ contenant de l'amidon et/ou contenant des protéines étant introduit dans une chambre de mélange (2) et, pour la transformation du matériau de départ en produit de transformation, le matériau de départ étant soumis par un liquide chauffé à une température de procédé (T_{U}) d'au moins 50°C sous forme d'un jet sous pression (7) s'écoulant à travers une buse de pression (6) et étant ainsi transporté contre une surface d'impact (10), **caractérisé en ce que** le matériau de départ est introduit sous forme de poudre dans la chambre de mélange (2), de préférence sous forme de farine, de poudre d'amidon, de grains de céréales, de farine grossière, de poudre de gélatine ou de poudre de gluten, et est sollicité par le jet sous pression (7) réalisé sous forme de jet de liquide lors de sa descente dans la chambre de mélange (2) et **en ce que**, pour générer le jet sous pression (7), le liquide est transporté à une pression de transport d'au moins 10 bars à travers une buse de pression (6) et présente une vitesse d'au moins 100 km/h.

2. Procédé selon la revendication 1, **caractérisé en ce qu'**on prépare, comme produit de transformation, de la colle d'amidon, de l'amidon frit, de la gélatine dissoute ou de la colle protéinique.

3. Procédé selon la revendication 1 ou 2, **caractérisé en ce que** la surface d'impact (10) est formée par une paroi interne de la chambre de mélange ou par un insert dans la chambre de mélange.

4. Procédé selon l'une quelconque des revendications précédentes, **caractérisé en ce que** la température de transformation est au moins une température de gélification du matériau de départ contenant de l'amidon, une température de dissolution et/ou de dénaturation de protéines du matériau de départ contenant des protéines ou une température de friture.

5. Procédé selon l'une quelconque des revendications précédentes, **caractérisé en ce que** pour générer de la colle d'amidon comme produit de transformation ou du matériau de départ dissous contenant des protéines, en particulier de la gélatine dissoute ou du gluten dissous comme produit de transformation, on utilise en tant que liquide, de l'eau ou une solution aqueuse, en particulier une solution d'hydroxyde de calcium, qui est chauffée à une température de procédé (T_{U}) d'au moins 55°C, de préférence d'au moins 60°C, plus préférablement d'au moins 70°C, encore plus préférablement d'au moins 80°C, de manière particulièrement préférée d'au moins 90°C et/ou à une température de procédé (T_{U}) de la plage de valeurs entre 55°C et 130°C, encore plus préférablement entre 71°C et 100°C.

6. Procédé selon l'une quelconque des revendications 1 à 4, **caractérisé en ce que** pour générer de l'amidon frit comme produit de transformation, on utilise de l'huile comme liquide et celle-ci est chauffée à une température de procédé (T_{U}) d'au moins 130°C, de préférence d'au moins 140°C, plus préférablement d'au moins 150°C et/ou à une température de procédé (T_{U}) de la plage de valeurs entre 130°C et 200°C, encore plus préférablement entre 140°C et 190°C.

7. Procédé selon l'une quelconque des revendications précédentes, **caractérisé en ce que** pour générer le jet sous pression (7), le liquide est transporté à travers la buse de pression (6) à une pression de transport d'au moins 20 bars et/ou à une pression de transport de la plage de pressions entre 10 bars et 500 bars, de préférence entre 30 bars et 500 bars.

8. Procédé selon la revendication 7, **caractérisé en ce que** le liquide est chauffé à l'aide d'un dispositif de chauffage (12), en particulier d'un dispositif de chauffage en continu, disposé dans le sens de transport du liquide en amont de la buse de pression (6), en particulier à une température (T₁) supérieure à la température de procédé (T_{U}).

9. Procédé selon l'une quelconque des revendications 7 ou 8, **caractérisé en ce que** le jet sous pression (7) présente une vitesse d'au moins 250 km/h.

10. Procédé selon l'une quelconque des revendications 7 à 9, **caractérisé en ce que** la buse de pression (6) est une buse rotative et/ou est conçue de manière à générer un motif de protection en forme de cône creux ou en forme d'assiette.

11. Procédé selon l'une quelconque des revendications 7 à 10, **caractérisé en ce que** la buse de pression (6) est déplacée par rapport à la surface d'impact (10), en particulier pendant la soumission du matériau de départ au jet sous pression (7), de préférence dans un mouvement de translation, plus préférablement dans un mouvement ascendant et descendant vertical.

12. Procédé selon l'une quelconque des revendications précédentes, **caractérisé en ce que** le produit de transformation est transporté par pompage hors de la chambre de mélange (2).

13. Procédé selon l'une quelconque des revendications précédentes, **caractérisé en ce que** le produit de transformation est mélangé avec d'autres additifs, de préférence à l'extérieur de la chambre de mélange (2), en particulier pour la préparation d'un aliment.
